(19) Europäisches Patentamt
European Patent Office
Office européen des brevets

(11) **EP 2 100 457 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(21) Anmeldenummer: **07847016.8**

(22) Anmeldetag: **07.12.2007**

(51) Int Cl.:
**H04N 7/26** *(2006.01)* **G06T 9/00** *(2006.01)*

(86) Internationale Anmeldenummer:
**PCT/EP2007/010664**

(87) Internationale Veröffentlichungsnummer:
**WO 2008/068035 (12.06.2008 Gazette 2008/24)**

(54) **TEXTURSYNTHESE**

TEXTURE SYNTHESIS

SYNTHÈSE DE TEXTURE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **08.12.2006 DE 102006058014**

(43) Veröffentlichungstag der Anmeldung:
**16.09.2009 Patentblatt 2009/38**

(73) Patentinhaber: **Fraunhofer-Gesellschaft zur Förderung der angewandten Forschung e.V.
80686 München (DE)**

(72) Erfinder: **NDJIKI-NYA, Patrick
13505 Berlin (DE)**

(74) Vertreter: **Schenk, Markus et al
Schoppe, Zimmermann, Stöckeler & Zinkler
Patentanwälte
Postfach 246
82043 Pullach bei München (DE)**

(56) Entgegenhaltungen:
• **KWATRA V ET AL: "graphcut textures: image and video synthesis using graph cuts" ACM TRANSACTIONS ON GRAPHICS, ACM, NEW YORK, NY, US, Bd. 22, Nr. 3, 1. Juli 2003 (2003-07-01), Seiten 277-286, XP002379286 ISSN: 0730-0301**

• **PATRICK NDJIKI-NYA ET AL: "A New Generic Texture Synthesis Approach for Enhanced H. 264/MPEG4-AVC Video Coding" VISUAL CONTENT PROCESSING AND REPRESENTATION LECTURE NOTES IN COMPUTER SCIENCE;;LNCS, SPRINGER-VERLAG, BE, Bd. 3893, 1. Januar 2006 (2006-01-01), Seiten 121-128, XP019030433 ISBN: 978-3-540-33578-8**

• **NDJIKI-NYA P ET AL: "Improved H.264/AVC coding using texture analysis and synthesis" PROCEEDINGS 2003 INTERNATIONAL CONFERENCE ON IMAGE PROCESSING. ICIP-2003. BARCELONA, SPAIN, SEPT. 14 - 17, 2003; [INTERNATIONAL CONFERENCE ON IMAGE PROCESSING], NEW YORK, NY : IEEE, US, Bd. 2, 14. September 2003 (2003-09-14), Seiten III-849, XP002286886 ISBN: 978-0-7803-7750-9**

• **MUSMANN H G ET AL: "OBJECT-ORIENTED ANALYSIS-SYNTHESIS CODING OF MOVING IMAGES" SIGNAL PROCESSING. IMAGE COMMUNICATION, ELSEVIER SCIENCE PUBLISHERS, AMSTERDAM, NL, Bd. 1, Nr. 2, 1. Oktober 1989 (1989-10-01), Seiten 117-138, XP000234864 ISSN: 0923-5965**

• **GILGE M ED - TORRES L ET AL: "REGION-ORIENTED TEXTURE CODING" VIDEO CODING : THE SECOND GENERATION APPROACH, DORDRECHT : KLUWER ACADEMIC PUBL, NL, 1. Januar 1996 (1996-01-01), Seiten 171-218,TITLE, XP000976931 ISBN: 978-0-7923-9680-2**

EP 2 100 457 B1

**Beschreibung**

Die vorliegende Erfindung bezieht sich auf die Textursynthese.

Textursynthese bezeichnet einen Vorgang, bei welchem Bildbestandteile, wie z.B. Wasser, Gras, Bäume, Wolken, Sand usw., und die in einem Bildursprungsmaterial fehlen, auf der Grundlage bekannter Texturen, wie z.B. aus dem Bildursprungsmaterial selbst, künstlich aufgefüllt bzw. synthetisiert werden. Bei der Videocodierung beispielsweise bedeutet die Berücksichtigung dieser Texturen bei der Codierung einen hohen Datenratenaufwand, da Texturen in der Regel detailreich und deshalb aufwendig zu codieren sind. Von einer exakten Rekonstruktion solcher Texturen wird deshalb manchmal abgesehen oder dieser Teil gar von der Codierung ausgenommen. Das Ausfindigmachen solcher Texturbereiche, die keine exakte Rekonstruktion benötigen, wird als Texturanalyse bezeichnet. Decoderseitig kann dann durch Textursynthese der jeweilige ausgelassene Texturbereich, wie oben erläutert, synthetisiert werden. Textursynthese ist allerdings nicht nur zur Reduktion der Datenrate bei der Übertragung von Videodaten einsetzbar. Vielmehr ist die Textursynthese auch als Mittel zur Bild/Videorestauration anwendbar.

Ein Ziel der Textursynthese sollte dabei darin bestehen, den zu synthetisierenden Bereich derart aufzufüllen, dass die Synthetisierung für den Betrachter unmerklich ist. Eine synthetisierte Textur sollte deshalb möglichst ähnliche Eigenschaften aufweisen, wie der an diesen zu synthetisierenden Bereich angrenzende Bildbereich. Zudem sollten die Übergänge für den Betrachter möglichst unmerklich sein.

In Kwatra V. et al.: "graphcut textures: image and video synthesis using graph cuts" ACM Transactions on Graphics, ACM, New York, NY, US, Bd. 22, Nr. 3, 1. Juli 2003, S. 277-286, wird ein Graphcut-Algorithmus für die Bild- und Videotextur-Synthese beschrieben. Zu synthetisierende Bereiche werden ausgewählt, überlappend mit anderen bereits synthetisierten Bereichen angeordnet, wobei dann mit einer Kostenfunktion eine Linie im Überlappungsbereich ausgewählt wird, die entscheidet, woraus die Pixel im Überlappungsbereich in den zu synthetisierenden Bereich übernommen werden. Über die Reihenfolge, wie ein zu synthetisierender Bereich zu synthetisieren ist, wird nichts ausgesagt. Ebenso wenig geht das Dokument auf Probleme bei der Schließung von Lücken eines zu synthetisierenden Bereichs ein.

Die Aufgabe der vorliegenden Erfindung besteht darin, eine Vorrichtung und ein Verfahren zur Textursynthese zu schaffen, die eine qualitativ bessere Textursynthese ermöglichen.

Diese Aufgabe wird durch eine Texturvorrichtung gemäß Anspruch 1 oder 12 und ein Verfahren gemäß Anspruch 13 oder 14 gelöst.

Gemäß Ausführungsbeispielen der vorliegenden Erfindung umfasst eine Textursynthesevorrichtung eine Einrichtung zum Bestimmen einer Priorisierung unter zu synthetisierenden Regionen eines zu synthetisierenden Bereiches abhängig von Bildinformationen in einem zu dem zu synthetisierenden Bereich benachbarten Bereich und eine Einrichtung zum Synthetisieren der zu synthetisierenden Regionen in einer Reihenfolge, die von der Priorisierung abhängt.

Eine Erkenntnis der vorliegenden Erfindung besteht darin, dass eine Qualität einer synthetisierten Textur verbessert werden kann, wenn die Sequenz der Orte der Synthetisierung nicht einfach unabhängig von dem zu dem zu synthetisierenden Bereich benachbarten Bereich festgelegt ist, sonden an die Bildinformationen in diesem benachbarten Bereich angepasst wird.

Gemäß einem Ausführungsbeispiel der vorliegenden Erfindung werden auf diese Weise beispielsweise zu synthetisierende Regionen, die zu Regionen mit für die menschliche Wahrnehmung relevanten Bildinformationen benachbart sind, höher priorisiert als solche, die zu Regionen mit für die menschliche Wahrnehmung weniger relevanten Bildinformationen benachbart sind, wobei als Maß für die Relevanz für die menschliche Wahrnehmung beispielsweise eine räumliche Objektkonturausprägung verwendet werden kann, beispielsweise gemessen in einer Intensität oder Länge des Bildinformationsgradienten. Auf diese Weise beginnt die Textursynthese in der Nähe von wahrnehmungsmäßig relevanteren Stellen des zu dem zu synthetisierenden Bereich benachbarten Bereichs zuerst und endet an wahrnehmungsmäßig weniger relevanten Stellen. Damit wird der Umstand ausgenutzt, dass erfahrungsgemäß die Textursynthese am Beginn des Befüllens bzw. Synthetisierens eines zu synthetisierenden Bereiches zu einer qualitativ besseren Synthetisierung führt als am Ende, wenn nur noch wenige zu synthetisierende Regionen existieren.

Bevorzugte Ausführungsbeispiele der vorliegenden Erfindung werden nachfolgend Bezugnehmen auf die beiliegenden Zeichnungen erläutert. Es zeigen:

Fig. 1    ein Blockschaltbild einer Textursynthesevorrich- tung gemäß einem Ausführungsbeispiel der vorlie- genden Erfindung;

Fig. 2    ein Flussdiagramm zur Veranschaulichung der Funk- tionsweise der Vorrichtung von Fig. 1;

Fig. 3    eine Skizze zur Veranschaulichung eines Beispiels für einen zu synthetisierenden Bereich in dem Fall eines Videomaterials;

Fig. 4a    ein Beispiel für ein ursprüngliches Texturbei- spiel;

Fig. 4b    ein Beispiel eines teilweise befüllten Texturbil- des, das durch Aufwärtsskalierung aus dem ur- sprünglichen Texturbeispiel aus Fig. 4a erhalten worden ist; und

Fig. 5a-f    eine Folge von sechs Zuständen des Texturbildes von Fig. 4b von dem Ausgangszustand nach Fig. 4b bis zu dem vollständig befüllten Zustand gemäß einem Ausführungsbeispiel der vorliegenden Erfin- dung.

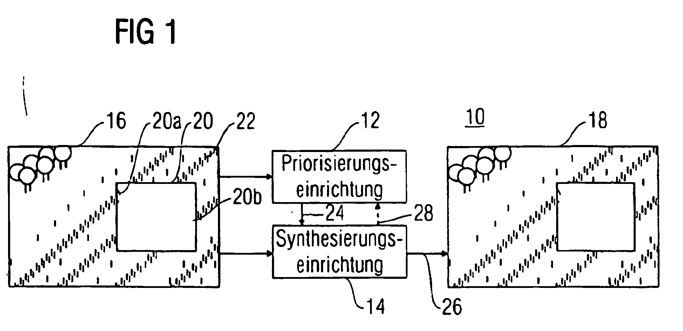

Fig. 1 zeigt eine Textursynthesevorrichtung 10 gemäß der vorliegenden Erfindung. Sie umfasst eine Priorisierungseinrichtung 12 und eine Synthetisierungseinrichtung 14. In Fig. 1 wird exemplarisch davon ausgegangen, dass es sich bei dem durch die Textursynthesevorrichtung 10 teilweise zur synthetisierenden Bildausgangsmaterial 16 um ein Standbild bzw. Stehbild handelt, das durch die Textursynthesevorrichtung 10 in ein vollständig ausgefülltes Bild 18 durch Textursynthese zu überführen ist. In der folgenden Beschreibung befindet sich jedoch noch ein Hinweis darauf, dass die vorliegende Anmeldung auch auf die Textursynthese in dem Fall eines Videos als dem Ausgangsmaterial anwendbar ist.

Insbesondere ist die Textursynthesevorrichtung 10 dafür zuständig, einen zu synthetisierenden Bereich 20 innerhalb des Bildes 16 zu synthetisieren, d.h. die fehlenden Bildinformationen in diesem Bereich aufzufüllen, so dass das künstliche Auffüllen in dem sich ergebenden Bild 18 für den Betrachter unmerklich ist.

Zu diesem Zweck weisen sowohl die Priorisierungseinrichtung 12 als auch die Synthetisierungseinrichtung 14 Zugriff auf das Bild 16 mit dem zu synthetisierenden Bereich 20 auf. Die Priorisierungseinrichtung 12 bestimmt eine Priorisierung unter zu synthetisierenden Regionen des zu synthetisierenden Bereiches 20 abhängig von Bildinformationen in dem zu dem zu synthetisierenden Bereich 20 benachbarten Bereich 22. Die Synthetisierungseinrichtung 14 synthetisiert den zu synthetisierenden Bereich, indem dieselbe die zu synthetisierenden Regionen in einer Reihenfolge befüllt bzw. synthetisiert, die von der von der Priorisierungseinrichtung erhaltenen Priorisierung 24 abhängt. Das Ergebnis, d.h. das synthetisierte Bild 18, gibt die Synthetisierungseinrichtung 14 an einen Ausgang 26 der Textursynthesevorrichtung 10 aus.

Wie es mit einem gestrichelten Pfeil 28 angedeutet ist, und wie es im Folgenden noch detaillierter erörtert werden wird, kann es vorgesehen sein, dass die Priorisierungseinrichtung 12 und die Synthetisierungseinrichtung 14 während der Synthetisierung des zu synthetisierenden Bereiches 20 einander gegenseitig beeinflussen, derart, dass die Priorisierungseinrichtung 12 ihre Priorisierung 24 unter den noch zu synthetisierenden Regionen in Abhängigkeit von den bisher synthetisierten Regionen des zu synthetisierenden Bereiches 20 aktualisiert.

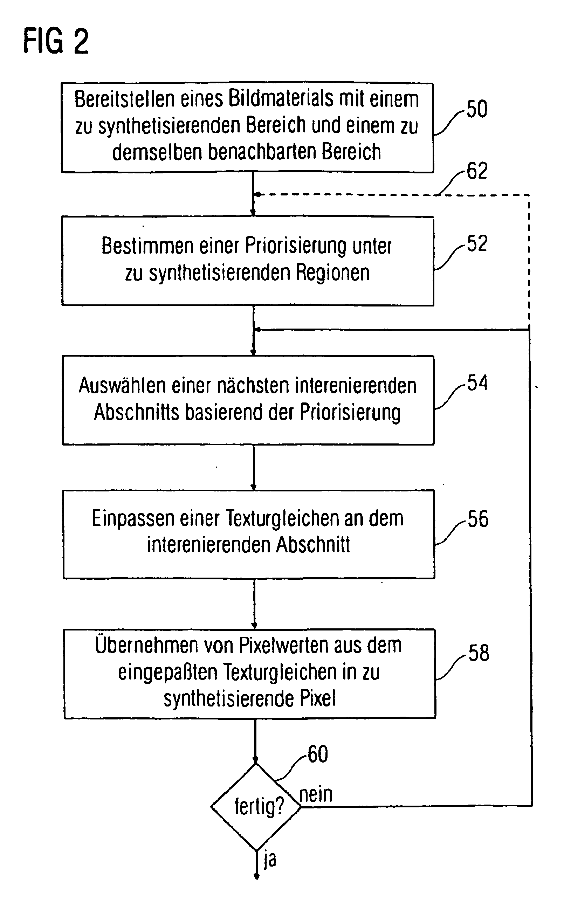

Nachdem im Folgenden der Aufbau der Textursynthesevorrichtung 10 beschrieben worden ist sowie ein grober Überblick über die Funktionsweise der einzelnen Einrichtungen derselben verschafft worden ist, wird im Folgenden die Funktionsweise der Textursynthesevorrichtung 10 von Fig. 1 anhand von Fig. 2 detaillierter gemäß einem Ausführungsbeispiel der vorliegenden Erfindung erläutert.

Der in Fig. 2 veranschaulichte Verfahrensablauf beginnt in Schritt 50 mit der Bereitstellung eines Bildmaterials mit einem zu synthetisierenden Bereich und einem zu demselben benachbarten Bereich. Wie im Vorhergehenden erwähnt, ist das bereitgestellte Bildmaterial in dem Fall von Fig. 1 exemplarisch ein Standbild 16. Die Bereitstellung umfasst beispielsweise lediglich das Ermöglichen eines Zugriffs auf die Bildinformationen des Bildmaterials 16 in dem zu dem zu synthetisierenden Bereich 20 benachbarten Bereich 22. Dabei muss beispielsweise die bereitgestellte Bildinformation nicht den gesamten Rest des Bildes 16 außerhalb des zu synthetisierenden Bereiches 20 einnehmen. Die bereitgestellten Bildinformationen können sich beispielsweise auch auf einen Bereich entlang der Grenze des zu synthetisierenden Bereiches 20 beschränken. Ferner ist es.möglich, dass entgegen der Darstellung in Fig. 1 der zu synthetisierende Bereich 20 und/oder der zu demselben benachbarte Bereich mit Bildinformationen ein nicht zusammenhängender Bereich ist.

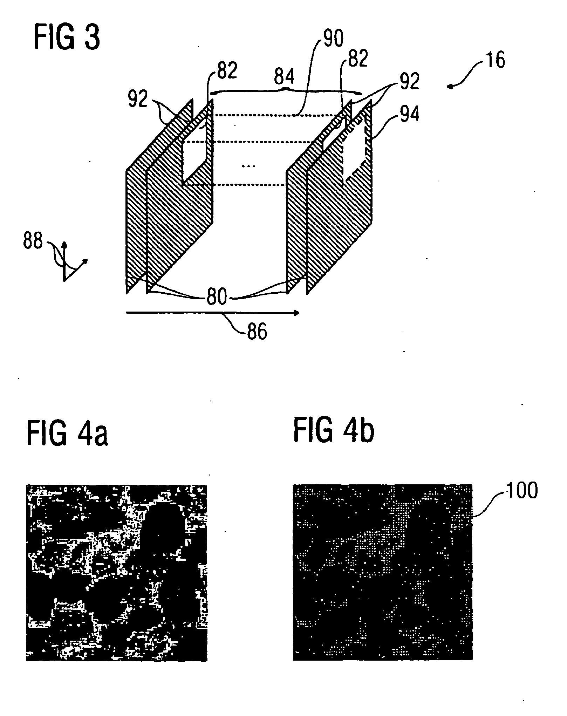

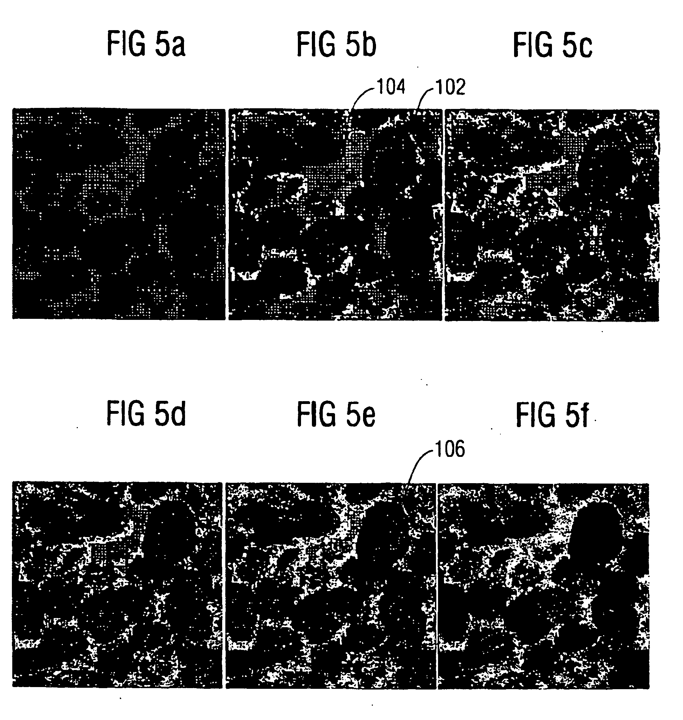

Die Bereitstellung in Schritt 50 kann auch eine Decodierung eines codierten Datenstromes umfassen, wie z.B. eine Dekompression. Ferner kann, wie es im Folgenden noch Bezug nehmend auf die Fig. 4 und 5 näher erläutert werden wird, die Bereitstellung 50 auch eine räumliche Skalierung eines Ausgangsbildmaterials umfassen, die die einzelnen Bildpunkte bzw. Pixel dieses Ausgangsmaterials auf ein Bildpunktarray mit mehr Bildpunkten verteilt bzw. aufskaliert, als das Bildausgangsmaterial umfasst.

Nach der Bereitstellung 50 nimmt die Priorisierungseinrichtung 12 eine Bestimmung einer Priorisierung unter zu synthetisierenden Teilregionen des zu synthetisierenden Bereiches 20 in Schritt 52 vor. Dazu verwendet die Priorisierungseinrichtung 12 beispielsweise eine bereits vorhandene Unterteilung des zu synthetisierenden Bereiches, wie z.B. die Unterteilung in Pixel, wobei jedoch eine Unterteilung in Regionen zu mehreren oder Clustern von Pixeln ebenfalls möglich ist. Die Bestimmung der Priorisierung 24 nimmt die Priorisierungseinrichtung 12 abhängig von den Bildinformationen in dem zu dem zu synthetisierenden Bereich 20 benachbarten Bereich 22 vor. Insbesondere überprüft die Priorisierungseinrichtung 12 beispielsweise für jede zu synthetisierende Region, die in einer Nähe dieser zu synthetisierenden Region, wie z.E. in einer vorbestimmten maximalen Entfernung oder in einem vorbestimmten Feld um dieselbe herum, befindlichen Bildinformationen daraufhin, ob dieselben für die menschliche Wahrnehmung relevante Merkmale beinhalten, wie z.B. Objektkonturen oder dergleichen, und stellt die Priorität für eine zu synthetisierende Region um so größer ein, desto ausgeprägter die in der Nachbarschaft befindlichen relevanten Merkmale sind.

Die Relevanz für die menschliche Wahrnehmung kann bei der Prioritätsbestimmung 52 beispielsweise dadurch berücksichtigt werden, dass für jede zu synthetisierende Region die Bildinformationsgradienten, wie z.B. die Gradienten der Luminanz, in dem benachbarten Bildinformationen ausgewertet werden. Beispielsweise faltet die Priorisierungseinrichtung 12 in Schritt 52 einen räumlichen Verlauf einer Intensität bzw. Länge eines Bildinformationsgradienten über den zu dem zu synthetisierenden Bereich 20 benachbarten Bereich 22 hinweg mit einer geeignete normierten Nachbarschaftsfunktion, wie z.B. einer räumlich begrenzten Rechteckfunktion, um einen Prioritätswert pro Pixel zu erhalten. Zudem kann es sein, dass das Ergebnis der oben erwähnten Prüfung der Bildinformationen in der Nachbarschaft einer zu synthetisierenden Region auf für die menschliche Wahrnehmung relevante Merkmale hin auf die jeweilige zu synthetisierende Region ausgeweitet wird, wie z.B. durch Interpolation oder Extrapolation. Zusätzlich wird es aus dem nachfolgend beschriebenen Beispiel nach Fig. 4a-5f deutlich werden, dass es in dem Fall der Synthetisierung in dem Fall der Aufwärtsskalierung möglich ist, die Konturausprägung in den vorbekannten benachbarten Bildbereichen und/ oder in den zu synthetisierenden Regionen aus dem noch nicht skalierten Ursprungsbild herzuleiten.

Weiterhin kann die Priorisierung davon abhängig gemacht werden, wie viele bereits synthetisierte oder zu dem zu dem zu synthetisierenden Bereich 20 benachbarten Bereich 22 gehörende Pixel zu dem jeweiligen zu synthetisierenden Pixel benachbart sind, um beispielsweise eine höhere Priorisierung solchen Pixeln zuzuweisen, die hiervon mehr aufweisen.

Das Ergebnis des Schrittes 52 ist eine Priorisierung unter den zu synthetisierenden Regionen, wie z.B. Pixeln, innerhalb des Bereiches 20. Anders ausgedrückt legt diese Priorisierung eine Reihenfolge unter den zu synthetisierenden Regionen fest. Diese Priorisierung 24 sendet die Einrichtung 12 an die Synthetisierungseinrichtung 14, die daraufhin in einem Schritt 54 abhängig von dieser Priorisierung einen nächsten interessierenden Abschnitt des zu synthetisierenden Bereiches 20 auswählt. Der Schritt 54 kann beispielsweise einfach darin bestehen, diejenige zu synthetisierende Region auszuwählen, der in Schritt 52 der höchste Prioritätswert zugewiesen worden ist. Allerdings kann in dem Schritt 54 auch eine Ballung bzw. Ansammlung von mehreren zu synthetisierenden Regionen mit hoher Priorität gegenüber vereinzelten zu synthetisierenden Regionen mit höherer Priorität bevorzugt ausgewählt werden, wie z.B. durch Tiefpassfilterung des Bezug nehmend auf den Schritt 52 exemplarisch erläuterten Prioritätswertverlaufes über die Pixel in dem Bereich 20 hinweg.

Der in Schritt 54 ausgewählte interessierende Abschnitt dient dazu, den ungefähren Ort anzugeben, an der als nächstes die Synthetisierung durchgeführt werden soll, die in Schritt 56 durch die Synthetisierungseinrichtung 14 dadurch durchgeführt wird, dass sie versucht, einen Texturflicken an dem interessierenden Abschnitt in die Bildinformationen 22 einzupassen. Den Texturflicken bzw. Patch gewinnt die Synthetisierungseinrichtung 14 beispielsweise aus einem Abschnitt, der sich in dem außerhalb des zu synthetisierenden Bereiches 20 befindlichen Teil 22 des Bildes 16 befindet. Der Texturflicken kann allerdings auch aus einer vordefinierten Bibliothek von Texturflicken stammen. Der Texturflicken ist bevorzugt so ausgewählt, dass er bei einem Betrachter einen ähnlichen Eindruck vermittelt, wie die ursprünglichen fehlenden Inhalte des zu synthetisierenden Bereichs 20 an dieser Stelle. Der Synthetisierungseinrichtung 14 wird hierzu beispielsweise ein Abschnitt aus den Bildinformationen 22 des Bildes 16 vorgegeben, aus dem die Synthetisierungseinrichtung 14 sich einen Texturflicken geeignet auswählen kann. Den so erhaltenen Texturflicken, der beispielsweise ein rechteckiges Texturfeld darstellt, versucht die Synthetisierungseinrichtung 14 derart um den interessierenden Abschnitt herum über den zu synthetisierenden Bereich 20 zu verschieben, so dass gemäß einem geeigneten Ähnlichkeitsmaß dieser Texturflicken den Bildinformationen in dem Bereich 22 an der Verschiebeposition am ähnlichsten ist. Anders ausgedrückt sucht die Synthetisierungseinrichtung 14 in Schritt 56 nach einer Lage des Texturflickens unter den möglichen Lagen aus, bei denen der Texturflicken mit dem interessierenden Abschnitt bzw. der in Schritt 54 ausgewählten zu synthetisierenden Region überlappt, derart, dass diese ausgewählte Lage zu dem geringsten Unterschied bzw. zumindest einem lokalen Unterschiedsminimum zwischen den Bildinformationen des Texturflickens und den entsprechenden Bildinformationen in dem Bild 16 führt.

In dem Schritt 58 übernimmt daraufhin die Synthetisierungseinrichtung 14 aus dem so eingepassten Texturflicken Bildinformationen in die zu synthetisierenden Regionen, mit denen der eingepasste Texturflicken überlappt. Die Übernahme in Schritt 58 kann optional von einer Überprüfung abhängig gemacht werden, ob die zu übernehmenden Bildinformationen bzw. Pixelwerte zu unerwünschten Artefakten führen würden, wie z.B. außerhalb des Farbraumes lägen, der durch seine Nachbarpixel aufgespannt wird, um erst in dem Fall eines Ergebnisses der Überprüfung, dass keine solchen Artefakte entstehen, die entsprechenden Pixel bzw. zu synthetisierenden Regionen mit den entsprechenden Bildinformationen des Texturflickens zu füllen.

Durch den Schritt 58 werden eine oder mehrere der zu synthetisierenden Regionen innerhalb des zu synthetisierenden Bereiches 20 synthetisiert. Durch eine gestrichelte Linie in Fig. 1 ist dementsprechend eine Aufteilung des zu synthetisierenden Bereiches 20 in einen bereits synthetisierten Bereich 20a und einen noch zu synthetisierenden Bereich 20b angedeutet.

In einem Schritt 60 wird daraufhin überprüft, ob weitere zu synthetisierende Regionen vorhanden sind bzw. ob ein noch zu synthetisierender Bereich 20b vorhanden ist. Falls dies der Fall ist, fährt gemäß einem Ausführungsbeispiel die Synthetisierungseinrichtung 14 mit dem Schritt 54 fort, indem sie gemäß der bestehenden Priorisierung die Synthetisierung verbleibender zu synthetisierender Regionen in dem Bereich 20b durchführt, wobei sie die bereits synthetisierten Bereiche 20a bei Schritt 56 wie die Bildinformationen aus dem Bereich 22 verwendet. Zudem kann es sein, dass die Synthetisierungseinrichtung 14 in Schritt 58 in dem Fall, dass ein eingepasster Texturflicken auch mit bereits synthetisierten Regionen in dem Abschnitt 20a überlappt, Bildinformationen für diese bereits synthetisierten Regionen aus dem Texturflicken erneut übernimmt bzw. mit letzteren iterativ ersetzt, beispielsweise dann, wenn das aktuelle Ähnlichkeitsmaß eine höhere Ähnlichkeit anzeigt, als sie damals bzw. das letzte Mal der Bildinformationsübernahme in diesen Regionen zugrunde lag.

Wie es durch einen gestrichelten Pfeil 62 in Fig. 2 angedeutet ist, ist es ferner möglich, dass die Priorisierungseinrichtung 12 in dem Falle der Feststellung der Existenz weiterer zu synthetisierender Regionen in dem Schritt 60 die Synthetisierung aus Schritt 58 dazu verwendet, die Priorisierung zu aktualisieren, indem sie die Priorisierung unter den noch zu synthetisierenden Regionen innerhalb des noch nicht synthetisierten Bereiches 20b in Schritt 52 erneut bestimmt, wobei die Aktualisierung ggf. auf eine Umgebung des interessierenden Abschnitts beschränkt werden kann, da nur dort sich neue Bildinformationen durch synthetisierte Regionen 20a ergeben haben sowie neue Orte, an denen gegebenenfalls eine Gradientenintensität verstellbar ist. In diesem Fall folgt auf den Schritt 52 die Auswahl des nächsten interessierenden Abschnitts basierend auf der aktualisierten Priorisierung usw.

Sollte in dem Schritt 60 festgestellt werden, dass keine weiteren zu synthetisierenden Regionen mehr vorhanden sind, so ist die Synthetisierung beendet, d.h. der zu synthetisierende Bereich 20 in dem Bild 16 ist vollständig gefüllt, wie es in dem Bild 18 in Fig. 1 gezeigt ist.

Bezug nehmend auf die vorhergehende Beschreibung von Fig. 2 wird noch darauf hingewiesen, dass es möglich ist, die Aktualisierung der Priorisierung, wie sie durch den gestrichelten Teil 62 angedeutet ist, beispielsweise nicht nach jeder Einpassung 56 vorzunehmen, sondern nach einer festen Anzahl von Einpassungen oder einer variablen Anzahl von Einpassungen, wie z.B. abhängig davon, ob der nächste interessierende Abschnitt gemäß der noch nicht aktualisierten Priorisierung von dem letzten interessierenden Abschnitt einen vorbestimmten Abstand hätte, so dass eine Aktualisierung zu keinem anderen Ergebnis führte. Ferner wird explizit noch einmal darauf hingewiesen, dass es nicht notwendig ist, die Priorisierung überhaupt zu aktualisieren. In dem Fall der Nicht-Aktualisierung wird beispielsweise das weitere Auffüllen des zu synthetisierenden Bereiches ab dem Zeitpunkt, zu dem keine noch zu synthetisierende Region mehr zu den Bildinformationen 20 des zu dem ursprünglichen zu synthetisierenden Bereich 20 benachbarten Bereiches 22 benachbart ist, mit einer Reihenfolge der interessierenden Abschnitte ausgeführt, die nicht weiter von erneuten Priorisierungsberechnungen abhängt oder aus der alten Priorisierungsbestimmung nur hergeleitet ist, indem beispielsweise entlang einer geschlossenen Grenzlinie zwischen bereits synthetisiertem Bereich 20a und noch nicht synthetisiertem Bereich 20b in entsprechender Reihenfolge die weitere Synthetisierung vorgenommen wird, um einen in Fig. 1 exemplarisch zusammenhängend dargestellten zu synthetisierenden Bereich 20 von außen nach innen zu synthetisieren.

Die vorhergehende Beschreibung bezog sich vornehmlich auf den exemplarischen Fall der Textursynthese in Bezug auf Standbilder. Die vorhergehende Beschreibung ist allerdings ohne Weiteres auch auf die Textursynthese von Videosequenzen, d.h. Sequenzen von Frames bzw. Bildern, anwendbar. Fig. 3 zeigt beispielsweise ein Video bzw. eine Videosequenz 16' als Beispiel eines Bildursprungsmaterials für die Textursynthesevorrichtung von Fig. 1. Das Video 16' umfasst mehrere aufeinanderfolgende Frames 80, wobei zu synthetisierende Abschnitte 82 in einher Folge 84 von aufeinanderfolgenden Frames 80 dieses Videos 16' einen sowohl zeitlich bzw. in Zeitrichtung 86 als auch räumlich bzw. in den beiden Raumrichtungen 88, wie z.B. Zeilen- und Spaltenrichtung, ausgedehnten zu synthetisierenden Bereich 90 definieren. Fig. 3 zeigt den exemplarischen Fall, dass es sich bei dem räumlich und zeitlich ausgedehnten zu synthetisierenden Bereich 90 um einen in allen drei Richtungen 88, 86 rechteckigen Bereich handelt. Es ist allerdings ferner möglich, dass sich die einzelnen zu synthetisierenden Abschnitte 82 in den Frames 84 unterscheiden und beispielsweise nur teilweise überlappen, um einen zusammenhängenden zu synthetisierenden Bereich 90 zu bilden, oder aber sogar nicht überlappen, um einen nicht zusammenhängenden zeitlich und räumlich ausgedehnten zu synthetisierenden Bereich 90 zu definieren. In Übertragung auf die vorhergehende Beschreibung kann dann bei dem Schritt 56 zur Einpassung bzw. Befüllung ein Texturflickenvolumen verwendet werden, d.h. eine zeitliche Sequenz eines Texturflickens. Ferner könnte bei dem Schritt 52 berücksichtigt werden, dass sich ein zu dem zu synthetisierenden Bereich 90 benachbarter Bereich 92 des Videos 16', der in Fig. 3 schraffiert dargestellt ist, nicht nur lateral, d.h. räumlich bzw. in Raumrichtung 88 benachbart zu dem zu synthetisierenden Bereich 90 befindet, sondern ferner auch in zeitlicher Richtung benachbart, wie z.B. durch den gestrichelt dargestellten Bereich 94 in dem zeitlich auf den zu synthetisierenden Bereich 90 folgendem Frame 80 angedeutet.

Im Vorhergehenden wurde anhand der Figuren 1 bis 3 die Funktionsweise der Vorrichtung von Fig. 1 zumindest soweit es die Veranschaulichungen in den Figuren betrifft, vor dem Hintergrund beschrieben, es handele sich bei dem zu synthetisierenden Bereich um einen zusammenhängenden und kompakten Bereich, wie es beispielsweise bei der Rekonstruktion defekter Bildmaterialien vorkommen kann oder der Synthese von durch Texturanalyse codierten Bildmaterialien. Im Folgenden wird noch ein wenig detaillierter die Funktionsweise der Vorrichtung von Fig. 1 vor dem Hintergrund einer Aufwärtsskalierung eines Bildes beschrieben. Im Gegensatz zu einer einfachen Aufwärtsskalierung, bei der im Wesentlichen jedes Pixel eines Ursprungsbildes auf beispielsweise vier Pixel in dem Falle einer isotropen Skalierung um den Faktor 2 aufgeweitet wird, werden bei der nachfolgend beschriebenen Aufwärtsskalierung die Pixel des Ursprungsbildes einzeln auf Pixelpositionen des Zielarrays unter gegenseitiger Beabstandung eines oder mehrerer Pixel verteilt, wobei die verbleibenden Zwischenräume dann auf die vorhergehend beschriebene Weise gefüllt werden.

Bei diesem Szenario der räumlichen Skalierung wird ein Startbild, wie z.B. dasjenige, das in Fig. 4a gezeigt ist, aufwärtsskaliert, indem die einzelnen Pixel des Startbildes (Fig. 4a) gleichmäßig auf die Pixelpositionen eines Zielarrays von Pixelpositionen verteilt werden, wobei das Ergebnis in Fig. 4b dargestellt ist. Anders ausgedrückt wird bei einer Bereitstellung 50 das Ausgabebild (4b) - beziehungsweise das Ausgabevideo in dem Fall eines Videomaterials, wovon im Folgenden jedoch exemplarisch nicht ausgegangen wird - mit bekannten Pixelwerten des ursprünglichen Texturbeispiels (Fig. 4a) initialisiert. Insbesondere werden die Pixelwerte bzw. Pixel des ursprünglichen Texturbildes von Fig. 4a an jeder $k_x$-ten und $k_y$-ten Position in x- bzw. y-Richtung platziert. Die Initialisierung des Ausgabesignals, deren Ergebnis in Fig. 4b dargestellt ist, lässt ersehen, dass die unbekannten Pixelpositionen, die in einem speziellen Grauton 100 dargestellt sind, einen großen Teil der Gesamtmenge an Pixeln in dem Ausgabebild von Fig. 4b darstellen, nämlich $1-1/(k_x \cdot k_y)$. Das bedeutet, dass unter der Annahme, dass $k_x = k_y = 2$ ist, 75 % der Abtastwerte des Ausgabebildes zu synthetisieren sind, bzw. gefüllt werden müssen.

Gemäß dem Schritt 52 wird nun zur Auffüllung des aufskalierten Bildes die bereits im Vorhergehenden angesprochene Synthesestrategie verwendet, die in Form eines deterministischen Vorgehens wahrnehmungsmäßig relevante Eigenschaften des ursprünglichen Bildes bewahrt. Dabei beschreibt die nachfolgende Beschreibung den Schritt 52 etwas detaillierter als im Vorhergehenden geschehen, wobei jedoch die vorliegenden Ausführungen weiteres auch auf die Anwendungsbeispiele anwendbar sind, die im vorhergehenden vermehrt angesprochen wurden und in den Figuren 1 und 3 angedeutet sind. Insbesondere wird nun jeder Pixelposition in dem Ausgabebild von Fig. 4b ein inhaltsbasierter Prioritätskoeffizient zugewiesen, der die Verarbeitungschronologie bzw. - Reihenfolge der zu synthetisierenden Positionen festlegt. Die Priorität ist hoch, wenn wahrnehmungsmäßig relevante Merkmale, wie z.B. Objektkonturen, in der entsprechenden Nachbarschaft verfügbar bzw. hoch ausgeprägt sind. Die Priorität ist niedrig, wenn fast keines oder wenige solcher Merkmale an der und/oder um die interessierende Position herum verfügbar sind. Weitere Merkmale bzw. Abhängigkeiten wie z.B. die Anzahl an bekannten Nachbarn bzw. Pixeln mit bereits vorinitialisiertem oder synthetisiertem Pixelwert oder jegliches anderes a-priori Wissen oder jede andere anwendungsspezifische Kenntnis können natürlich auch in die Bildung des Prioritätskoeffizienten $p(x,y)$ integriert werden, um seinen Informationswert zu verbessern.

Die unterschiedlichen Terme des Prioritätskoeffizienten sollten auf den gleichen Wertebereich normiert sein, und können beispielsweise in einer multiplikativen Art und Weise kombiniert werden, um beispielsweise zu folgender Bestimmungsberechnung für den Prioritätskoeffizienten $p(x,y)$ zu führen:

$$p(x,y) = \|\delta(x,y)\| \cdot h_1(x,y) \cdot h_2(x,y) \cdot \ldots$$

Alternativ kann natürlich auch eine Linearkombination verwendet werden, um den Prioritätskoeffizienten zu berechnen, nämlich durch

$$p(x,y) = \alpha_0 \cdot \|\delta(x,y)\| + \alpha_1 \cdot h_1(x,y) + \alpha_2 \cdot h_2(x,y) \cdot \ldots$$

Natürlich ist nicht nur jegliche geeignete Linearkombination möglich, sondern auch nicht lineare Verknüpfungen sind denkbar.

Bei den obigen Gleichungen stellt $\delta(x,y)$ den Gradientenvektor des Ausgabebildes an der Position $(x,y)$ dar, wobei der Gradient beispielsweise über die Luminanz gebildet wird. $\|a\|$ zeigt die Norm eines Vektors a an. $h_i(x,y)$ sind optionale Prioritätskoeffiziententerme und $\alpha_i$ stellt die Gewichtungen der oben dargestellten Linearkombinationen dar.

Unabhängig von den wahrnehmungsmäßig relevanten Merkmalen, die verwendet worden sind, um die Prioritätskoeffizienten zu bestimmen, sollte zwischen den bekannten und den unbekannten bzw. zu synthetisierenden Pixeln unterschieden werden. Objektkonturen können beispielsweise durch Berechnen der Intensität der Gradienten in dem ursprünglichen Texturbild (Fig. 4a) für die bekannten Pixelpositionen bestimmt werden. Diese Intensitäten können dann den entsprechenden Pixelpositionen 100 in dem Ausgabebild (Fig. 4b) zugewiesen werden. Die Gradienten an unbekannten Pixelpositionen können entweder auf einen vorbestimmten Wert, wie z.B. 0, gesetzt bzw. initialisiert werden oder durch Interpolation oder Extrapolation aus benachbarten bekannten Gradienten hergeleitet bzw. initialisiert werden.

In den nachfolgenden Schritten 54 bis 58 werden die Pixelpositionen mit unbekannten Nachbarn in absteigender Prioritätsfolge verarbeitet. Die unbekannten Pixel werden durch ein Blockeinpassen gefüllt. Das bedeutet, dass das ursprüngliche Texturbild aus Fig. 4a in Flicken bzw. Pflaster, wie z.B. rechteckige Bereiche, aufgespalten wird, die überlappen oder nicht überlappen können. Diese Flicken werden über die gerade interessierende Position, nämlich diejenige mit der höchsten Priorität, innerhalb eines begrenzten Suchbereiches lateral verschoben. Dadurch wird eine möglichst große Übereinstimmung mit den bekannten Pixelpositionen erreicht. Translatorische oder auch komplexere Bewegungsmodelle können hierbei beim verschieben verwendet werden. Der Flicken und die Verschiebung, die die beste Übereinstimmung erzielten, werden ausgewählt, um die fehlenden Pixelpositionen zu füllen. Zur Übereinstimmungsfindung kann jegliches geeignetes Ähnlichkeitsmaß verwendet werden, wie z.B. der mittlere quadratische Fehler bzw. MSE zwischen den Pixelwerten des Flickens und der Pixelwerte der bekannten Pixelpositionen. Um unerwünschte Artefakte zu vermeiden, kann vor dem Befüllen der unbekannten Pixel durch einen Flicken ein Konsistenztest oder mehrere Konsistenztests durchgeführt werden, der bzw. die beispielsweise dazu vorgesehen sind, sicher zu stellen, dass das jeweilige Kandidatenpixel, das zur Befüllung vorgesehen ist, innerhalb des Farbbereiches seiner zukünftigen Nachbarn liegt. In einem alternativen Konsistenztest für den Fall der Aufwärtsskalierung kann vorsehen sein, dass eine nxn-Nachbarschaft um einen Aufpunkt, wie z.B. eine 3 x 3-Nachbarschaft mit Aufpunkt in der Mitte der 3x3-Maske, betrachtet wird, um jeweils die vertikalen, horizontalen und diagonalen Nachbarn zum Aufpunkt in dem aufwärtsskalierten Zielbild einzeln auszuwerten. Beispielsweise muss der eingesetzte bzw. synthetisierte Pixelwert bzw. die eingesetzte bzw. synthetisierte Farbe innerhalb der Grenzen liegen, die durch das jeweilige Paar von Nachbarn vorgegeben werden, d.h. diagonal, horizontal und vertikal, d.h. innerhalb der Schnittmenge der Intervalle, die durch die Pixelwerte der jeweiligen Nachbarpaare, d.h. diagonal, horizontal und vertikal, vorgegeben werden. Falls dies nicht der Fall ist, wird kein Bildpunkt aus dem Patch in das aufwärtsskalierte Bild eingesetzt.

Zuvor gefüllte Positionen können in späteren Iterationen aktualisiert werden, falls eine bessere Übereinstimmung gefunden wird, wie es im Vorhergehenden beschrieben wurde.

Wie es im Vorhergehenden bezugnehmend auf die gestrichelte Linie 62 beschrieben wurde, können die Prioritätskoeffizienten iterativ aktualisiert werden. Dabei kann die Aktualisierung auf solche Koeffizienten beschränkt werden, deren jeweilige Nachbarn in der vorhergehenden Iteration aufgrund neu eingefügter bzw. befüllter Pixelpositionen modifiziert worden sind. Die Aktualisierung kann zudem lediglich einen Teilsatz der Terme des Prioritätskoeffizienten dieser Pixelpositionen betreffen, wie z.B. den Term, der sich auf die Anzahl von bekannten Nachbarn bezieht, so dass sich die Aktualisierung auch auf nur diese Terme beschränken kann.

Fig. 5a-f zeigen nun ein experimentelles Ergebnis, das durch die soeben bezugnehmend auf die Figuren 4a und 4b erläuterten Schritte erhalten worden ist. Dabei sind Experimente durchgeführt worden, bei denen der Prioritätskoeffizient wie folgt definiert worden ist:

$$p(x,y) \;=\; \|\delta(x,y)\| \cdot h_1(x,y)$$

wobei $h_1(x,y)$ abhängig von der Anzahl gültiger, d.h. bereits synthetisierter oder bereits vor Beginn der Synthetisierung bekannter, Pixel in der Nachbarschaft einer Ausgabepixelposition $(x,y)$ definiert wurde, wie z.B. in der Nachbarschaft bestehend aus den diagonal, waagerecht und senkrecht angrenzenden Pixelpositionen. Folglich wurde $h_1(x,y)$ und folglich auch $p(x,y)$ nach jeder Iteration aktualisiert. Eine 9x9-Nachbarschaft von Pixelpositionen wurde für die Synthese verwendet. Beispielsweise wurden 9x9-Texturflecken in dem Schritt 56 verwendet. Unbekannte Gradienten wurden mit 0 initialisiert. Es wurden zudem nicht-überlappende Texturflecken aus dem Ursprungsbild von Fig. 4a in Kombination mit einem translatorischen Bewegungsmodel verwendet. Als Ähnlichkeitskriterium wurde der MSE verwendet, und unbekannte Pixelpositionen wurden lediglich einmal ersetzt, d.h. ein Überschreiben bereits synthetisierter Pixelwerte wurde nicht vorgenommen.

Fig. 5a-f zeigen nun die Iteration, die sich von dem Zustand nach Fig. 4b (entspricht Fig. 5a) bis zu dem Zustand ergibt, da alle zu synthetisierenden Pixelpositionen synthetisiert sind (Fig. 5f). Anders ausgedrückt zeigt Fig. 5a - 5f das sich ergebende Ergebnis zu unterschiedlichen Iterationszeitpunkten des Syntheseprozesses. Insbesondere war Gegenstand ein 75 x 75 Ursprungsbild (Fig. 4a) aus dem Brodatz-Testsatz, das mit $k_x = k_y = 2$ auf 150 x 150 Pixel skaliert wurde. Es ist ersichtlich, dass durch die Priorisierung die Textursynthese gemäß Fig. 2 dazu tendiert, Objektkonturen zuerst zu synthetisieren (vgl. bspw. 102 in Fig. 5b), während das Innere 104 der Objekte erst nachfolgend verarbeitet bzw. synthetisiert wird, wie es beispielsweise in den Fig. 5c - e ersichtlich ist.

Das Konvergenzverhalten oben beschriebener iterativer Vorgehensweisen hin zu einer Lösung des gegebenen Syntheseproblems ist ein kritischer Punkt. Tatsächlich kann es sein, dass das Vorgehen nach Fig. 2 an einer Position einer hohen Priorität hängen bleibt, falls keine geeigneten Gegenmaßnahmen getroffen werden. Dies kann beispielsweise passieren, falls einige der Nachbarn der gerade interessierenden Position höchster Priorität nicht unter Verwendung der Flicken des ursprünglichen Texturbildes gefüllt werden können. Um dies zu vermeiden, können Positionen, die keine neu aktualisierten Nachbarn erhalten, gesperrt und bei der weiteren Abarbeitung der Prioritätsreihenfolge in den nachfolgenden Iterationen unbeachtlich ihrer spezifischen Priorität ignoriert werden. Folglich wird in diesem Fall die Position mit der nächst höheren Priorität für die nächste Iteration ausgewählt 54. Eine gesperrte Ausgabepixelposition wird nur dann entsperrt, falls der entsprechende Nachbar in der vorhergehenden Iteration aktualisiert worden ist. Der Algorithmus kann vorzeitig stoppen, d.h. bevor alle zu synthetisierenden Pixelpositionen synthetisiert worden sind, falls die Anzahl an Iterationen einen bestimmten Schwellwert überschritten hat oder alle Positionen mit einem Prioritätskoeffizienten größer 0 auch gesperrt sind. Alle solchen übrigbleibenden ungültigen Positionen könnte dann ein Pixelwert durch Interpolation zugewiesen werden.

In dem Beispiel von Fig. 5f wurden auf diese Weise beispielsweise lediglich 100 Pixel interpoliert, d.h. weniger als 1 %. Die Interpolation ist an dieser Stelle nicht kritisch, da die meisten der ungültigen Pixel weit von den Objektgrenzen bzw. den Objektkonturen entfernt sind und sich somit typischerweise in homogenen Regionen befinden (vgl. 106 in Fig. 5e).

Im Vorhergehenden ist gemäß einem Ausführungsbeispiel eine Interpolation verwendet worden, die im Notfall durchgeführt wird, um verbleibende Lücken in dem zu synthetisierenden Bereich zu schließen. Die Interpolation kann sich dabei auf die durch die zuvor mittels Synthese ermittelten Bildpunkte stützen oder, alternativ, lediglich auf das Originalbildsignal bezogen sein. Anders ausgedrückt kann der zu synthetisierende Bereich beispielsweise allein auf Grundlage der ursprünglichen Bildinformationen um den zu synthetisierenden Bereich herum durch Interpolation bzw. Extrapolation geschätzt werden, wobei dann, wenn am Ende der im Vorhergehenden beschriebenen Synthetisierung die Bildpunkte übrig bleiben, diese Bildpunkte aus dem interpolierten Bild gefüllt werden. Alternativ wird die Interpolation erst durchgeführt, wenn die Synthese nicht mehr weiter kommt, wobei dann zur Interpolation auch die synthetisierten Bildpunkte herangezogen werden. Bei dem Skalierungsausführungsbeispiel werden beispielsweise die im skalierten Bild fehlenden Bildpunkte aus dem interpolierten Signal kopiert. Selbiges geht aber natürlich auch bei dem Füllausführungsbeispiel nach den Fig. 1 bis 3.

Ferner ist es möglich, dass bei den obigen Ausführungsbeispielen sowohl für das Ausfällen eines zusammenhängenden Bereichs nach den Fig. 1 bis 3 als auch für die Aufwärtsskalierung weitere Nachverarbeitungsschritte oder ein Nachverarbeitungsschritt vorgesehen sein könnten. Ein solcher Nachverarbeitungsschritt könnte beispielsweise das Anwenden eines Median-Filters auf das synthetisierte Bild umfassen.

Die obigen Ausführungsbeispiele stellten somit ein Konzept für eine Struktur-berücksichtigende Textursynthese dar. Die Ausführungsbeispiele sind nützlich für Anwendungen, wo ein gegebenes Texturbeispiel auf eine beliebige Größe erweitert werden soll, sind aber nicht notwendiger Weise auf solche Anwendungen begrenzt. Die Bild/Video-Restauration, die räumliche Skalierung, die Umwandlung von einem verschachtelten bzw. Halbbild-Format zu einem progressiven Format, d.h. einem Format, bei dem jedes Frame vollständig zu einem Zeitpunkt aufgenommen worden ist, und die Bild/Video-Synthese stellen eine nicht abschließende Liste von exemplarischen Anwendungsbeispielen dar, bei denen oben ausgeführte Ausführungsbeispiele vorteilhaft Anwendung finden können. Dabei lagen obigen Ausführungsbeispielen vornehmlich zwei Schlüsselannahmen zugrunde, nämlich dass die Befüllungsreihendfolge der zu synthetisierenden Region die Qualität des Syntheseergebnisses beeinflusst, und dass eine dominante Strukturinformation in den gegebenen Texturbeispielen zuverlässig in den unbekannten Bereich bzw. das unbekannte Volumen ausgeweitet bzw. fortgepflanzt werden muss, um subjektiv hervorspringende Merkmale der Referenztexturebene zu berücksichtigen. Insofern stellen obige Ausführungsbeispiele eine effiziente Realisierung einer solchen Struktur-berücksichtigenden Textursynthese dar.

Schließlich wird noch darauf hingewiesen, dass abhängig von den Gegebenheiten obige Ausführungsbeispiele zur Textursynthese in Hardware oder in Software implementiert werden können. Die Implementation kann auf einem Speichermedium, insbesondere einer Diskette oder CD mit elektronisch auslesbaren Steuersignalen erfolgen, die so mit einem programmierbaren Computersystem zusammen wirken können, dass das entsprechende Verfahren ausgeführt wird. Allgemein besteht die Erfindung somit auch in einem Computer-Programm-Produkt mit einem auf einer Maschine lesbaren Träger gespeicherten Programmcode zur Durchführung des Erfindungsgemäßen Verfahrens, wenn das Computerprogrammprodukt auf einem Rechner abläuft. In anderen Worten ausgedrückt kann die Erfindung somit als ein Computer-Programm mit einem Programmcode zur Durchführung des Verfahrens realisiert werden, wenn das Computerprogramm auf einem Computer abläuft.

**Patentansprüche**

1. Textursynthesevorrichtung mit

   einer Einrichtung (12) zum Bestimmen einer Priorisierung (24) unter zu synthetisierenden Regionen eines zu synthetisierenden Bereiches (20) abhängig von Bildinformationen in einem zu dem zu synthetisierenden Bereich (20) benachbarten Bereich (22), so dass zu synthetisierende Regionen, die zu Regionen mit für die menschliche Wahrnehmung relevanteren Bildinformationen benachbart sind, höher priorisiert werden als solche, die zu Regionen mit für die menschliche Wahrnehmung weniger relevanten Bildinformationen benachbart sind; und

einer Einrichtung (14) zum Synthetisieren der zu synthetisierenden Regionen in einer Reihenfolge, die von der Priorisierung (24) abhängt,

wobei die Einrichtung (12) zum Bestimmen und die Einrichtung (14) zum Synthetisieren ausgebildet sind, um Bestimmung der Priorisierung und Synthetisierung iterativ durchzuführen, so dass nach einem Synthetisieren eines oder mehrerer der zu synthetisierenden Regionen durch die Einrichtung (14) zum Synthetisieren die Einrichtung (12) zum Bestimmen der Priorisierung (24) die Priorisierung (24) unter den verbleibenden zu synthetisierenden Regionen abhängig von den Bildinformationen in dem zu dem zu synthetisierenden Bereich benachbarten Bereich inklusive des einen oder der mehreren synthetisierten Regionen bestimmt, so dass unter den verbleibenden zu synthetisierenden Regionen zu synthetisierende Regionen, die zu Regionen aus dem zu dem zu synthetisierenden Bereich benachbarten Bereich inklusive des einen oder der mehreren synthetisierten Regionen mit für die menschliche Wahrnehmung relevanteren Bildinformationen benachbart sind, höher priorisiert werden als solche, die zu Regionen mit für die menschliche Wahrnehmung weniger relevanten Bildinformationen benachbart sind, und

wobei die Einrichtung zum Synthetisieren ausgebildet ist, um in dem Fall, dass dieselbe zu keiner von verbleibenden zu synthetisierenden Regionen eine geeignete Synthetisierung findet, die Synthetisierung abzubrechen und die verbleibenden zu synthetisierenden Regionen mittels einer Interpolation aufzufüllen.

2. Textursynthesevorrichtung gemäß Anspruch 1, bei der die Einrichtung (12) zum Bestimmen ausgebildet ist, um die Bestimmung der Priorisierung (24) abhängig von einer Verteilung von Gradientenintensitäten eines Gradientenfeldes der Bildinformationen in dem zu dem zu synthetisierenden Bereich (20) benachbarten Bildbereich (22) vorzunehmen.

3. Textursynthesevorrichtung gemäß Anspruch 2, bei der die Einrichtung (12) zum Bestimmen ausgebildet ist, um ein Gradientenfeld der Bildinformationen in dem zu dem zu synthetisierenden Bereich (20) benachbarten Bildbereich (22) durch Inter- oder Extrapolation von den zu dem zu synthetisierenden Bereich (20) benachbarten Bereich (22) in den zu synthetisierenden Bereich (20) auszudehnen und die Bestimmung der Priorisierung (24) abhängig von der ausgedehnten Verteilung von Gradientenintensitäten vorzunehmen.

4. Textursynthesevorrichtung gemäß einem der Ansprüche 1 bis 3, bei der der zu synthetisierende Bereich (20) und der zu dem zu synthetisierende Bereich (20) benachbarte Bereich (22) Abschnitte eines Standbildes sind.

5. Textursynthesevorrichtung gemäß Anspruch 1, bei der die Einrichtung (14) zum Synthetisieren ausgebildet ist, um zur Synthetisierung eine Lage eines Texturflickens relativ zu dem zu synthetisierenden Bereich benachbarten Bereich so zu bestimmen, dass ein Ähnlichkeitsmaß zwischen dem Texturflicken und dem zu dem zu synthetisierenden Bereich benachbarten Bereich reduziert ist, und in der bestimmten Lage Bildinformationen aus dem Texturflicken an einer einer der zu synthetisierenden Regionen entsprechenden Position in die eine der zu synthetisierenden Regionen zu übernehmen, wodurch diese zu synthetisierende Region synthetisiert wird.

6. Textursynthesevorrichtung gemäß Anspruch 5, bei der die Einrichtung zum Synthetisieren ausgebildet ist, um die Bildinformationen aus dem Texturflicken abhängig davon zu übernehmen, ob die zu übernehmenden Bildinformationen aus dem Texturflicken ein Kohärenzkriterium erfüllen, um ein Einführen von Artefakten durch die Synthetisierung zu reduzieren.

7. Textursynthesevorrichtung gemäß Anspruch 6, bei der die Einrichtung zum Synthetisieren so ausgebildet ist, dass nach dem Kohärenzkriterium eine zu übernehmende Bildinformation für einen zu synthetisierenden Bildpunkt in einer Schnittmenge von Intervallen liegen muss, deren Grenzen durch Pixelwerte von diagonalen, horizontalen und vertikalen Nachbarpaaren festgelegt sind.

8. Textursynthesevorrichtung gemäß einem der Ansprüche 5 bis 7, bei der die Einrichtung zum Synthetisieren ausgebildet ist, um Bildinformationen aus dem Texturflicken an der bestimmten Lage auch an einer bereits synthetisierten Region in dieselbe zu übernehmen, wenn ein Ähnlichkeitsmaß eine höhere Ähnlichkeit anzeigt als ein Ähnlichkeitsmaß, das zu einem Texturflicken in einer weiteren Lage bestimmt worden ist, aus dem in dieser weiteren Lage die Bildinformationen zuletzt in die bereits synthetisierte Region übernommen worden sind.

9. Textursynthesevorrichtung gemäß Anspruch 8, bei der die Einrichtung zum Synthetisieren ausgebildet ist, um die Interpolation auf Basis der zuvor synthetisierten Regionen oder lediglich auf Basis des zu dem zu synthetisierenden Bereich benachbarten bereich zu bestimmen.

10. Textursynthesevorrichtung gemäß einem der Ansprüche 1 bis 9, bei der die Einrichtung (14) zum Synthetisieren ausgebildet ist, um in dem Fall, dass dieselbe zu einer gemäß der Reihenfolge an der Reihe seienden zu synthetisierenden Region keine geeignete Synthetisierung findet, diese zu synthetisierende Region zu sperren und mit einer gemäß der Reihenfolge als nächstes an der Reihe seienden nicht gesperrten zu synthetisierenden Region fortzufahren.

11. Textursynthesevorrichtung gemäß Anspruch 10, bei der die Einrichtung zum Synthetisieren (14) ausgebildet ist, um in dem Fall, dass dieselbe eine zu synthetisierende Region, die zu der gesperrten zu synthetisierenden Region benachbart ist, synthetisiert, die gesperrte zu synthetisierende Region zu entsperren.

12. Textursynthesevorrichtung mit
einer Einrichtung (12) zum Bestimmen einer Priorisierung (24) unter zu synthetisierenden Regionen eines zu synthetisierenden Bereiches (20) abhängig von Bildinformationen in einem zu dem zu synthetisierenden Bereich (20) benachbarten Bereich (22); und
einer Einrichtung (14) zum Synthetisieren der zu synthetisierenden Regionen in einer Reihenfolge, die von der Priorisierung (24) abhängt,
wobei die Einrichtung (12) zum Bestimmen und die Einrichtung (14) zum Synthetisieren ausgebildet sind, um iterativ zu arbeiten, und derart, dass
in dem Fall, dass die Einrichtung (14) zum Synthetisieren zu einer gemäß der Reihenfolge an der Reihe seienden zu synthetisierenden Region keine geeignete Synthetisierung findet, diese zu synthetisierende Region gesperrt wird, und die Einrichtung (14) zum Synthetisieren mit einer gemäß der Reihenfolge als nächstes an der Reihe seienden nicht gesperrten zu synthetisierenden Region fortfährt und in nachfolgenden Iterationen die gesperrte zu synthetisierende Region unbeachtlich ihrer Priorität ignoriert, und
in dem Fall, dass die Einrichtung (14) zum Synthetisieren eine zu synthetisierende Region, die zu der gesperrten zu synthetisierenden Region benachbart ist, synthetisiert, die gesperrte zu synthetisierende Region entsperrt wird, sc dass die Priorität der entsperrten zu synthetisierenden Region in nachfolgenden Iterationen wieder beachtet wird.

13. Verfahren zur Textursynthese, mit folgenden Schritten:

Bestimmen (12) einer Priorisierung (24) unter zu synthetisierenden Regionen eines zu synthetisierenden Bereiches (20) abhängig von Bildinformationen in einem zu dem zu synthetisierenden Bereich (20) benachbarten Bereich (22); und
Synthetisieren (14) der zu synthetisierenden Regionen in einer Reihenfolge, die von der Priorisierung (24) abhängt,
wobei das Bestimmen und das Synthetisieren iterativ durchgeführt werden, derart, dass
in dem Fall, dass zu einer gemäß der Reihenfolge an der Reihe seienden zu synthetisierenden Region keine geeignete Synthetisierung gefunden wird, diese zu synthetisierende Region gesperrt wird, bei der Synthetisierung mit einer gemäß der Reihenfolge als nächstes an der Reihe seienden nicht gesperrten zu synthetisierenden Region fortgefahren wird und in nachfolgenden Iterationen die gesperrte zu synthetisierende Region unbeachtlich ihrer Priorität ignoriert wird, und
in dem Fall, dass eine zu synthetisierende Region, die zu der gesperrten zu synthetisierenden Region benachbart ist, synthetisiert wird, die gesperrte zu synthetisierende Region entsperrt wird, so dass die Priorität der entsperrten zu synthetisierenden Region in nachfolgenden Iterationen wieder beachtet wird.

14. Verfahren zur Textursynthese, mit folgenden Schritten:

Bestimmen (12) einer Priorisierung (24) unter zu synthetisierenden Regionen eines zu synthetisierenden Bereiches (20) abhängig von Bildinformationen in einem zu dem zu synthetisierenden Bereich (20) benachbarten Bereich (22), so dass zu synthetisierende Regionen, die zu Regionen mit für die menschliche Wahrnehmung relevanteren Bildinformationen benachbart sind, höher priorisiert werden als solche, die zu Regionen mit für die menschliche Wahrnehmung weniger relevanten Bildinformationen benachbart sind; und
Synthetisieren (14) der zu synthetisierenden Regionen in einer Reihenfolge, die von der Priorisierung (24) abhängt,
wobei das Bestimmen und das Synthetisieren iterativ durchgeführt werden, und zwar derart dass nach einem Synthetisieren eines oder mehrerer der zu synthetisierenden Regionen die Priorisierung (24) unter den verbleibenden zu synthetisierenden Regionen abhängig von den Bildinformationen in dem zu dem zu synthetisierenden Bereich benachbarten Bereich inklusive des einen oder der mehreren synthetisierten Regionen bestimmt wird, so dass zu synthetisierende Regionen, die zu Regionen mit für die menschliche Wahrnehmung relevanteren Bildinformationen benachbart sind, höher priorisiert werden als solche, die zu Regionen mit für die menschliche Wahrnehmung weniger relevanten Bildinformationen benachbart sind, und

wobei das Synthetisieren durchgeführt wird, um in dem Fall, dass zu keiner von verbleibenden zu synthetisierenden Regionen eine geeignete Synthetisierung gefunden wird, die Synthetisierung abzubrechen und die verbleibenden zu synthetisierenden Regionen mittels einer Interpolation aufzufüllen.

**15.** Computerprogramm mit einem Programmcode zur Durchführung des Verfahrens nach Anspruch 13 oder 14, wenn das Computerprogramm auf einem Computer abläuft.

**Claims**

**1.** Texture synthesis device comprising

means (12) for determining a prioritization (24) among regions to be synthesized of an area (20) to be synthesized as a function of image information in an area (22) adjacent to the area (20) to be synthesized, so that regions to be synthesized which are adjacent to regions comprising image information more relevant to human perception are given higher priority than those which are adjacent to regions comprising image information less relevant to human perception; and

means (14) for synthesizing the regions to be synthesized in an order that depends on the prioritization (24), wherein the means (12) for determining and the means (14) for synthesizing are formed to perform the determination of the prioritization and the synthesization so that, after a synthesization of one or several of the regions to be synthesized by the means (14) for synthesizing, the means (12) for determining the prioritization (24) iteratively determines the prioritization (24) among the remaining regions to be synthesized, as a function of the image information in the area adjacent to the area to be synthesized, including the one or several synthesized regions, so that, among the remaining regions to be synthesized, regions to be synthesized which are adjacent to regions from the area adjacent to the area to be synthesized, including the one or more synthesized regions, with image information more relevant to human perception are given higher priority than those which are adjacent to regions comprising image information less relevant to human perception, and

wherein the means for synthesizing, in the case that same does not find a suitable synthesization for any of the remaining regions to be synthesized, is formed to cancel the synthesization and to fill the remaining regions to be synthesized by means of interpolation.

**2.** Texture synthesis device according to claim 1, wherein the means (12) for determining is formed to determine the prioritization (24) as a function of a distribution of gradient intensities of a gradient field of the image information in the image area (22) adjacent to the area (20) to be synthesized.

**3.** Texture synthesis device according to claim 2, wherein the means (12) for determining is formed to extend a gradient field of the image information in the image area (22) adjacent to the area (20) to be synthesized by inter- or extrapolation from the area (22) adjacent to the area (20) to be synthesized into the area (20) to be synthesized, and to determine the prioritization (24) as a function of the extended distribution of gradient intensities.

**4.** Texture synthesis device according to any one of claims 1 to 3, wherein the area (20) to be synthesized and the area (22) adjacent to the area (22) to be synthesized are portions of a still image.

**5.** Texture synthesis device according to claim 1, wherein the means (14) for synthesizing is formed to determine, for synthesization, a position of a texture patch relative to the area adjacent to the area to be synthesized such that a similarity measure between the texture patch and the area adjacent to the area to be synthesized is reduced, and to adopt, in the determined position, image information from the texture patch at a position corresponding to one of the regions to be synthesized into the one of the regions to be synthesized, whereby this region to be synthesized is synthesized.

**6.** Texture synthesis device according to claim 5, wherein the means of synthesizing is formed to adopt the image information from the texture patch as a function of whether the image information to be adopted from the texture patch meet a coherence criterion in order to reduce an introduction of artifacts by the synthesization.

**7.** Texture synthesis device according to claim 6, wherein the means for synthesizing is formed so that, according to the coherence criterion, image information to be adopted for a pixel to be synthesized must be within an intersection of intervals the borders of which are determined by pixel values of diagonal, horizontal and vertical neighboring pairs.

**8.** Texture synthesis device according to any one of claims 5 to 7, wherein the means for synthesizing is formed to adopt image information from the texture patch at the determined position also at an already synthesized region into same, when a similarity measure indicates a higher level of similarity than a similarity measure that was determined for a texture patch in a further position, from which, in this further position, the image information were last adopted into the already synthesized region.

**9.** Texture synthesis device according to claim 8, wherein the means for synthesizing is formed to determine the interpolation on the basis of the previously synthesized regions or solely on the basis of the area adjacent to the area to be synthesized.

**10.** Texture synthesis device according to any one of claims 1 to 9, wherein the means (14) for synthesizing, in the case that same does not find a suitable synthesization for a region to be synthesized whose turn it is according to the order, is formed to block this region to be synthesized and to continue with a region to be synthesized which is not blocked and whose turn it is next according to the order.

**11.** Texture synthesis device according to claim 10, wherein the means for synthesizing (14), in the case that same synthesizes a region to be synthesized which is adjacent to the blocked region to be synthesized, is formed to unblock the blocked region to be synthesized.

**12.** Texture synthesis device comprising
means (12) for determining a prioritization (24) among regions to be synthesized of an area (20) to be synthesized as a function of image information in an area (22) adjacent to the area (20) to be synthesized; and
means (14) for synthesizing the regions to be synthesized in an order that depends on the prioritization (24),
wherein the means (12) for determining and the means (14) for synthesizing are formed to work iteratively, and such that
in the case that the means (14) for synthesizing does not find a suitable synthesization for a region to be synthesized whose turn it is according to the order, this region to be synthesized is blocked and the means (14) for synthesizing continues with a non-locked region to be synthesized whose turn it is next, according to the order, and, in subsequent iterations, ignores the blocked region to be synthesized regardless of its priority, and
in the case that the means (14) for synthesizing syntheses a region to be synthesized which is adjacent to the blocked region to be synthesized, the blocked region to be synthesized is unblocked, so that the priority of the unblocked region to be synthesized, in further iterations, is again taken into account.

**13.** Method for texture synthesis comprising:

determining (12) a prioritization (24) among regions to be synthesized of an area (20) to be synthesized, as a function of image information in an area (22) adjacent to the area (20) to be synthesized; and
synthesizing (14) of the regions to be synthesized in an order that depends on the prioritization (24),
wherein the determining and the synthesizing are performed iteratively, such that
in the case that no suitable synthesization is found for a region to be synthesized whose turn it is according to the order, this region to be synthesized is blocked, it is continued, in the synthesization, with a non-locked region to be synthesized whose turn it is next, according to the order, and, in subsequent iterations, the blocked region to be synthesized is ignored regardless of its priority, and
in the case that a region to be synthesized which is adjacent to the blocked region to be synthesized, is synthesized, the blocked region to be synthesized is unblocked, so that the priority of the unblocked region to be synthesized, in subsequent iterations, is again taken into account.

**14.** Method for texture synthesis, comprising:

determining (12) a prioritization (24) among regions to be synthesized of an area (20) to be synthesized, as a function of image information in an area (22) adjacent to the area (20) to be synthesized, so that regions to be synthesized which are adjacent to regions comprising image information more relevant to human perception are given higher priority than those which are adjacent to regions comprising image information less relevant to human perception; and
synthesizing (14) the regions to be synthesized in an order that depends on the prioritization (24),
wherein determining and synthesizing are performed iteratively such that, after a synthesization of one or several of the regions to be synthesized, the prioritization (24) is determined among the remaining regions to be synthesized, as a function of the image information in the area adjacent to the area to be synthesized, including the one or several synthesized regions, so that regions to be synthesized which are adjacent to regions comprising image information more relevant to human perception are given higher priority than those which are adjacent to regions comprising image information less relevant to human perception, and

wherein synthesizing, in the case that no suitable synthesization for any of the remaining regions to be synthesized is found, is performed so as to cancel the synthesization and to fill the remaining regions to be synthesized by means of interpolation.

**15.** Computer program with a program code for performing the method according to claim 13 or 14, when the computer program is executed on a computer.

**Revendications**

**1.** Dispositif de synthèse de texture, avec

un moyen (12) pour déterminer une priorisation (24) parmi les régions à synthétiser d'une zone à synthétiser (20) en fonction d'informations d'image dans une zone (22) adjacente à la zone à synthétiser (20), de sorte que les régions à synthétiser qui sont adjacentes à des régions à informations d'image plus pertinentes pour la perception humaine soient priorisées plus hautement que celles qui sont adjacentes à des régions à informations d'image moins pertinentes pour la perception humaine; et

un moyen (14) pour synthétiser les régions à synthétiser dans un ordre qui dépend de la priorisation (24),

le moyen (12) pour déterminer et le moyen (14) pour synthétiser étant réalisés de manière à réaliser itérativement la détermination de la priorisation et la synthétisation, de sorte que, après une synthétisation de l'une ou plusieurs des régions à synthétiser par le moyen (14) pour synthétiser, le moyen (12) pour déterminer la priorisation (24) détermine la priorisation (24) parmi les régions à synthétiser restantes en fonction des informations d'image dans la zone adjacente à la zone à synthétiser, y compris l'une ou les plusieurs régions synthétisées, de sorte que, parmi les régions à synthétiser restantes, les régions qui sont adjacentes à des régions de la zone adjacente à la zone à synthétiser, y compris l'une ou les plusieurs régions synthétisées, avec des informations d'image plus pertinentes pour la perception humaine sont priorisées plus hautement que celles qui sont adjacentes à des régions avec des informations d'image moins pertinentes pour la perception humaine, et

le moyen pour synthétiser étant réalisé de manière à interrompre la synthétisation au cas où il ne trouve, pour aucune des régions à synthétiser restantes, aucune synthétisation appropriée et à remplir les régions à synthétiser restantes au moyen d'une interpolation.

**2.** Dispositif de synthèse de texture selon la revendication 1, dans lequel le moyen (12) pour déterminer est réalisé de manière à procéder à la détermination de la priorisation (24) en fonction d'une distribution des intensités de gradients d'un champ de gradients des informations d'image dans la zone d'image (22) adjacente à la zone à synthétiser (20).

**3.** Dispositif de synthèse de texture selon la revendication 2, dans lequel le moyen (12) pour déterminer est réalisé de manière à étendre à la zone à synthétiser (20) un champ de gradients des informations d'image dans la zone d'image (22) adjacente à la zone à synthétiser (20) par interpolation ou extrapolation de la zone (22) adjacente à la zone à synthétiser (20) et à procéder à la détermination de la priorisation (24) en fonction de la distribution étendue des intensités de gradients.

**4.** Dispositif de synthèse de texture selon l'une des revendications 1 à 3, dans lequel la zone à synthétiser (20) et la zone (22) adjacente à la zone à synthétiser (20) sont des segments d'une image fixe.

**5.** Dispositif de synthèse de texture selon la revendication 1, dans lequel le moyen (14) pour synthétiser est réalisé de manière à déterminer, pour la synthétisation, une position d'une pièce de texture par rapport à la zone adjacente à la zone à synthétiser de sorte qu'une mesure de similitude entre la pièce de texture et une zone adjacente à la zone à synthétiser soit réduite, et à reprendre, dans la position déterminée, dans l'une des régions à synthétiser, des informations d'image de la pièce de texture en une position correspondant à l'une des régions à synthétiser, d'où cette région à synthétiser est synthétisée.

**6.** Dispositif de synthèse de texture selon la revendication 5, dans lequel le moyen pour synthétiser est réalisé de manière à reprendre les informations d'image de la pièce de texture en fonction de si les informations d'image à reprendre de la pièce de texture remplissent un critère de cohérence, pour réduire une introduction d'artifices par la synthétisation.

**7.** Dispositif de synthèse de texture selon la revendication 6, dans lequel le moyen pour synthétiser est réalisé de sorte que, selon le critère de cohérence, une information d'image à reprendre pour un point d'image à synthétiser doive se trouver à une intersection d'intervalles dont les limites sont fixées par les valeurs de pixel de paires voisines diagonales, horizontales et verticales.

**8.** Dispositif de synthèse de texture selon l'une des revendications 5 à 7, dans lequel le moyen pour synthétiser est réalisé de manière à reprendre des informations d'image de la pièce de texture à la position déterminée également dans une région déjà synthétisée lorsqu'une mesure de similitude indique une plus grande similitude qu'une mesure de similitude qui a été déterminée pour une pièce de texture en une autre position de laquelle les informations d'image dans cette autre position ont en dernier lieu été reprises dans la région déjà synthétisée.

**9.** Dispositif de synthèse de texture selon la revendication 8, dans lequel le moyen pour synthétiser est réalisé de manière à déterminer l'interpolation sur base des régions synthétisées auparavant ou uniquement sur base de la zone adjacente à la zone à synthétiser.

**10.** Dispositif de synthèse de texture selon l'une des revendications I à 9, dans lequel le moyen (14) pour synthétiser est réalisé de manière à bloquer, au cas où il ne trouve pas de synthétisation appropriée pour une région à synthétiser arrivant à son tour selon l'ordre, cette région à synthétiser et à continuer avec une région à synthétiser non bloquée suivante arrivant à son tour selon l'ordre.

**11.** Dispositif de synthèse de texture selon la revendication 10, dans lequel le moyen pour synthétiser (14) est réalisé de manière à débloquer, au cas où il synthétise une région à synthétiser qui est adjacente à la région à synthétiser bloquée, la région à synthétiser bloquée.

**12.** Dispositif de synthèse de texture, avec
un moyen (12) pour déterminer une priorisation (24) parmi les régions à synthétiser d'une zone à synthétiser (20) en fonction d'informations d'image dans une zone (22) adjacente à la zone à synthétiser (20); et
un moyen (14) pour synthétiser les régions à synthétiser dans un ordre qui dépend de la priorisation (24),
le moyen (12) pour déterminer et le moyen (14) pour synthétiser étant réalisés de manière à fonctionner itérativement et de sorte que
au cas où le moyen (14) pour synthétiser ne trouve pas de synthétisation appropriée pour une région à synthétiser arrivant à son tour selon l'ordre, cette région à synthétiser soit bloquée, et que le moyen (14) pour synthétiser continue avec une région à synthétiser non bloquée suivante arrivant à son selon l'ordre et ignore, dans les itérations suivantes, la région à synthétiser bloquée quelle que soit sa priorité, et au cas où le moyen (14) pour synthétiser synthétise une région à synthétiser qui est adjacente à la région à synthétiser bloquée, la région à synthétiser bloquée soit débloquée, de sorte qu'il soit à nouveau tenu compte de la priorité de la région à synthétiser débloquée dans les itérations suivantes.

**13.** Procédé de synthèse de texture, aux étapes suivantes consistant à:

déterminer (12) une priorisation (24) parmi les régions à synthétiser d'une zone à synthétiser (20) en fonction d'informations d'image dans une zone (22) adjacente à la zone à synthétiser (20); et
synthétiser (14) les régions à synthétiser dans un ordre qui dépend de la priorisation (24),
la détermination et la synthétisation étant réalisées de manière itérative, de sorte que
au cas où il n'est pas trouvé de synthétisation appropriée pour une région à synthétiser arrivant à son tour selon l'ordre, cette région à synthétiser soit bloquée, qu'il soit continué, lors de la synthétisation, par une région à synthétiser non bloquée suivante arrivant à son tour selon l'ordre et que, dans les itérations suivantes, la région à synthétiser bloquée soit ignorée, quelle que soit sa priorité, et
au cas où une région à synthétiser qui est adjacente à la région à synthétiser bloquée est synthétisée, la région à synthétiser bloquée soit débloquée, de sorte qu'il soit à nouveau tenu compte de la priorité de la région à synthétiser débloquée dans les itérations suivantes.

**14.** Procédé de synthèse de texture, aux étapes suivantes consistant à:

déterminer (12) une priorisation (24) parmi les régions à synthétiser d'une zone à synthétiser (20) en fonction d'informations d'image dans une zone (22) adjacente à la zone à synthétiser (20), de sorte que les régions à synthétiser qui sont adjacentes à des régions à informations d'image plus pertinentes pour la perception humaine soient priorisées plus hautement que celles qui sont adjacentes à des régions à informations d'image moins pertinentes pour la perception humaine; et

synthétiser (14) les régions à synthétiser dans un ordre qui dépend de la priorisation (24),

la détermination et la synthétisation étant réalisées de manière itérative, et ce de sorte que, après une synthétisation de l'une ou plusieurs des régions à synthétiser, la priorisation (24) parmi les régions à synthétiser restantes soit déterminée en fonction des informations d'image dans la zone adjacente à la zone à synthétiser, y compris l'une ou les plusieurs régions synthétisées, de sorte que les régions à synthétiser qui sont adjacentes à des régions avec des informations d'image plus pertinentes pour la perception humaine soient priorisées plus hautement que celles qui sont adjacentes à des régions avec des informations d'image moins pertinentes pour la perception humaine, et

la synthétisation étant réalisée de manière à interrompre la synthétisation au cas où il n'est trouvé de synthétisation appropriée pour aucune des régions à synthétiser restantes, et à remplir les régions à synthétiser restantes au moyen d'une interpolation.

15. Programme d'ordinateur avec un code de programme pour réaliser le procédé selon la revendication 13 ou 14 lorsque le programme d'ordinateur est exécuté sur un ordinateur.

## FIG 1

Priorisierungseinrichtung

Synthesierungseinrichtung

# FIG 2

Bereitstellen eines Bildmaterials mit einem zu synthetisierenden Bereich und einem zu demselben benachbarten Bereich ⟋50

⟋62

Bestimmen einer Priorisierung unter zu synthetisierenden Regionen ⟋52

Auswählen einer nächsten interenierenden Abschnitts basierend der Priorisierung ⟋54

Einpassen einer Texturgleichen an dem interenierenden Abschnitt ⟋56

Übernehmen von Pixelwerten aus dem eingepaßten Texturgleichen in zu synthetisierende Pixel ⟋58

⟋60

fertig? nein

ja

FIG 3

FIG 4a

FIG 4b

FIG 5a     FIG 5b     FIG 5c

FIG 5d     FIG 5e     FIG 5f

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Kwatra V. et al.** graphcut textures: image and video synthesis using graph cuts. *ACM Transactions on Graphics, ACM,* 01. Juli 2003, vol. 22 (3), 277-286